# EUROPÄISCHE PATENTANMELDUNG

(11) **EP 2 899 973 A1**
(43) Veröffentlichungstag der Anmeldung: **29.07.2015**
(21) Anmeldenummer: 14152797.8
(22) Anmeldetag: 28.01.2014
(51) Int. Cl.: H04N 13/02, H04N 13/00, H04N 5/33

(54) **Verfahren und System zur thermografischen 3D-Erfassung von dreidimensionalen Objekten**

(71) Anmelder: Siemens AG Österreich, 1210 Wien (AT)
(72) Erfinder: Hatzl, Jürgen, 7423 Grafenschachen (AT); Holzmann, Thomas, 8010 Graz (AT); Huber, Thomas, 8010 Graz (AT); Kluckner, Stefan, 8047 Graz (AT); Poier, Georg, 8020 Graz (AT)
(74) Vertreter: Maier, Daniel Oliver

(57) **Zusammenfassung**

Die Erfindung betrifft eine Verfahren und ein System zur thermografischen 3D-Erfassung von dreidimensionalen Objekten. Für eine Datenerfassung ist dabei eine Aufnahmeeinheit (AE) mit zwei geometrisch festverbundenen Sensoren (S1, S2) vorgesehen, wobei von einem ersten Sensor (S1) Einzelfarbbilder und von einem zweiten Sensor (S2) Wärmebilder eines dreidimensionalen Objektes aufgenommen werden. Eine Aufnahme der Einzelfarbbilder und der jeweils zugehörigen Wärmebilder des Objektes durch die Sensoren (S1, S2) erfolgt dabei ortsynchron und zeitgleich (1). Die jeweiligen Einzelfarbbilder werden dann mit den jeweils zugehörigen Wärmebildern online von der Aufnahmeeinheit (AE) über eine Datenübertragungseinrichtung (DE) als Bild- und Wärmebilddaten an eine Servereinheit (SE) übermittelt (2). Von der Servereinheit (SE) wird dann aus den mit dem ersten Sensor (S1) aufgenommenen und online empfangenen Bilddaten eine aktuelle dreidimensionale Objektdarstellung abgeleitet (3). Die jeweils zugehörigen, vom zweiten Sensor (S2) aufgenommenen Wärmebilddaten werden für ein Aufbringen einer Thermalinformation auf die aktuelle, dreidimensionale Objektdarstellung herangezogen (4). Dann wird die jeweils aktuelle, dreidimensionale Objektdarstellung mit Thermalinformation angezeigt (5), wodurch auf einfache Weise eine schnelle und verlässliche Akquise eines dreidimensionalen Objektes über Sensoren (S1, S2) in eine 3D-Darstellung inklusive Erfassung einer zugehörigen Wärmestrahlung von tatsächlichen geometrischen Objektoberflächen ermöglicht wird.

## Beschreibung

### Technisches Gebiet

Die vorliegende Erfindung betrifft allgemein das Gebiet der Thermografie sowie der visuellen, digitalen Bildverarbeitung. Im Speziellen bezieht sich die vorliegende Erfindung auf ein Verfahren zur thermografischen, dreidimensionalen (3D-) Erfassung von dreidimensionalen Objekten, insbesondere von Infrastrukturelementen wie z.B. Gebäude, Schaltschränke, Leitungen oder Rohren, Solaranlagen, etc. Dabei wird für die Datenerfassung eine Aufnahmeeinheit mit zwei geometrisch festverbundenen Sensoren eingesetzt, wobei mit einem ersten Sensor zweidimensionale Einzelfarbbilder des Objektes und mit einem zweiten Sensor zu den jeweiligen Einzelfarbbildern zugehörige Wärmebilder des Objektes aufgenommen werden.

### Stand der Technik

Eine thermografische Erfassung von Infrastrukturelementen wie z.B. Gebäuden, Schaltschränken, Rohren/Leitungen, Kühlanlagen, Solaranalagen, etc. mit der Hilfe von optischen bzw. Bildsensoren gewinnt heutzutage zunehmend an Bedeutung. Die Thermografie wird daher immer häufiger für eine energiebasierte Planung, Optimierung und/oder Simulation z.B. im urbanen Bereich sowie für eine wärmetechnische Dokumentation von Ist- und/oder Soll-Zuständen eingesetzt. Anwendungen in diesem Bereich reichen dabei beispielsweise von Performanz-Vergleichsanalysen von Gebäuden bis hin zur Wärmeabstrahlungsbestimmung von z.B. Baugruppen, Rohren oder Leitungen.

Die Thermografie ist dabei ein bildgebendes Verfahren, durch welches Oberflächentemperaturen von Objekten zur Anzeige gebracht werden können. Dabei wird üblicherweise vom physikalischen Prinzip ausgegangen, dass von jedem Körper oder Objekt mit einer Temperatur über dem absoluten Nullpunkt an seiner Oberfläche eine elektromagnetische Strahlung ausgesendet wird, welche seiner Eigentemperatur proportional ist. Diese Strahlung kann mit einem bildgegebenen Sensor bzw. Gerät - einer sogenannten Wärmebildkamera - erfasst werden. Von einer Wärmebildkamera, welche auch als Thermalkamera bezeichnet wird, wird eine sogenannte Infrarotstrahlung (Wellenlängenbereich von ca. 0,7 µm bis ca. 14 µm) eines Objektes empfangen und aufgezeichnet. Durch die Wärmebild- oder Thermalkamera wird dann die für das menschliche Auge unsichtbare Infrarotstrahlung in elektrische Signale umgewandelt und in Form eines Wärmebildes in Form von sogenannten Falschfarben oder gegebenenfalls Grautonstufen sichtbar gemacht. Von den Falschfarben bzw. Grautonstufen im Wärmebild werden dabei die jeweiligen Oberflächentemperaturen eines aufgenommenen Objektes repräsentiert.

In Abhängigkeit von der jeweiligen Konfiguration kann von einer Wärmebild- oder Thermalkamera neben den Wärmebilddaten eines Objektes auch ein entsprechend zugehöriges zweidimensionales Bild desselben Objektes auf genommen werden. Diese Wärmebildkameras wie z.B. aus der Schrift EP 2 608 531 A2 bekannt können zweidimensional optische Bilder im visuellen Spektrum und zugehörige Wärmebilder im infraroten Spektrum zeit- und ortssynchron aufnehmen und verfügen dazu üblicherweise über zwei Sensoren - einen ersten Sensor für zweidimensionale Einzelbildaufnahmen im sichtbaren Spektrum und einen zweiten Sensor für Wärmebildaufnahmen. Aus der Schrift US 7,924,312 B2 ist ebenfalls einen derartige Wärmebild- oder Thermalkamera mit zwei Sensoren Aufnahmen von sogenannten Multilayer-Thermaldaten (d.h. Aufnahme von zweidimensionalen, digitalen Bilddaten im sichtbaren Bereich und von Wärmebildern im Infrarotbereich) bekannt, welche geometrisch z.B. durch ein Gehäuse festverbunden sind. Weiterhin weist die in der Schrift US 7,924,312 B2 offenbarte Thermalkamera ein LCD-Display auf, welches eine bedienerfreundliche Aufnahme bzw. Kontrolle der Aufnahmen ermöglicht. Alternativ können für thermografiche Aufnahmen in Kombination mit Einzelfarbaufnahmen beispielsweise auch zwei getrennte Sensoren - eine Thermalkamera und einen Digitalkamera - eingesetzt werden, wobei sichergestellt sein muss, dass von den beiden Kameras dieselbe Szenerie bzw. denselben Objektausschnitt aufgenommen wird.

Die Aufnahmen der Kamera mit zwei Sensoren oder der beiden getrennten Kameras können dann z.B. auf einem digitalen Speichermedium (z.B. Secure Digital Memory Card oder SD-Karte) abgespeichert werden. Diese Aufnahmen können zwar für Einzelbild-Analysen herangezogen werden, aber für eine dreidimensionale, thermografische Erfassung eines Objektes ist eine aufwendige manuelle und daher kostenintensive Nachbearbeitung sowie Bildverarbeitung notwendig. Aus den Einzelbildern kann mittels Bildverarbeitung eine dreidimensionale Szenegeometrie ermittelt werden, wobei häufig die Qualität und Auflösung der aufgenommenen Einzelbilder nicht für automatische Bildverarbeitungsmethoden geeignet ist. Weiterhin geht insbesondere bei der Abspeicherung der aufgenommenen Einzelfarb- und Wärmebilder - insbesondere beim Einsatz von zwei getrennten Sensoren - der Bezug zur beobachteten Szene bzw. zum aufgenommenen Objekt verloren. Eine Zuordnung zur Objekt- bzw. Szenengeometrie muss daher beispielweise per Hand in einem aufwändigen Prozess erfolgen, um einen Analyse des Objektes z.B. im Bereich der Bauthermografie, etc. durchführen zu können. Weiterhin ermöglichen derartige Thermalkameras - nur im Nachhinein, aber nicht vor Ort bei den Aufnahmen - eine Kontrolle, ob ein Objekt ausreichend für eine dreidimensionale Erfassung aufgenommen worden ist, oder ob relevante Bereich durchgehend wärmetechnisch mit den Sensoren erfasst worden sind.

Derzeit werden beispielsweise im Bereich der Computer Vision und Photogrammmetrie - wie z.B. in der Schrift: Warlaw, J., Gyrka, M., Wanner, F.; "A new Approach to Thermal Imaging Visualistation - Thermal Imaging in 3D", University College London, EngD Group Project, July 2010. - Problemstellungen eines automatischen Registrierens von Bildern in einem gemeinsamen 3D-Koordinatensystems behandelt, bei welchen Wärmebilder in eine Offline-Berechnung z.B. mittels sogenannter Structure-From-Motion- oder Triangualierungsmethoden integriert werden. Dabei werden z.B. zuerst Bildkorrespondenzen in hochauflösenden und leicht überlappenden Bildern hergestellt und dann daraus eine Kameraposition und eine vereinfachte geometrische Struktur der Szene bzw. des Objektes hergestellt. Durch eine nachfolgende, dichte Modellierung kann dann beispielsweise eine Thermalinformation z.B. als codierte Farbinformation aufgebracht und für eine Analyse verwendet werden. Weiterhin ist es z.B. auch möglich, Thermalinformationen auf Daten eines Objektes oder einer Szenerie aufzubringen, welche mittels einer Laserabtastung gewonnen wurden. Bei der Laserabtastung werden Oberflächen von Objekten mit einem Laserstrahl zeilen- oder rasterartig überstrichen und daraus ein Bild des Objektes gewonnen. Es ist allerdings bei beiden Methoden - Gewinnung der 3D-Objektdarstellung aus hochauflösenden, überlappenden Einzelbildern oder mittels Laserabtastung, dass einen Kombination von Bild- und Wärmebildinformation in einer zeitaufwendigen Offline-Berechnung und unter Einsatz kostenintensiver Hardware durchgeführt werden muss. Eine Interaktion bzw. Überprüfung während der Aufnahme der Bilder und Wärmebilder ist dabei nicht möglich.

Aus der Schrift "Vidas et al., "3D Thermal Mapping of Building Interiors using an RGB-D and Thermal Camera" ICRA, 2013." ist auch eine Einsatz von aktiven 3D-Sensoren in Kombination mit Thermalinformation bekannt, um einen Bezug von aufgenommenen Bildern automatisiert in einem dreidimensionalen Raum herzustellen. Dabei wird eine gewisse Interaktion bei der Datenaufnahme ermöglicht. Allerdings ist die in dieser Schrift vorgestellte Vorgehensweise aufgrund der eingesetzten Infrarottechnologie auf einen Innenraum oder auf kleine Szenen im Meter-Bereich anwendbar. Größere Objekte wie z.B. Gebäude, etc. können damit nicht dreidimensionale und thermografisch erfasst werden. Moderne Computer-Vision-Methoden für einen interaktive und echtzeittaugliche 3D-Rekonstruktion mittels Bildsensoren im sichtbaren Bereich aufgenommenen Objekten basierend auf einer Unterstützung von modernen Grafikprozessoren sind - wie z.B. aus der Schrift "Hoppe et al., "Online Feedback for Structure-From-Motion Image Aquisition", BVMC 2012," bekannt. Allerdings werden dabei Zusatzinformationen wie z.B. Wärmebildinformationen in der interaktiven 3D-Rekonstruktion nicht berücksichtigt.

### Darstellung der Erfindung

Der Erfindung liegt daher die Aufgabe zugrunde, ein Verfahren sowie ein System zur thermografischen dreidimensionalen oder 3D-Erfassung von Objekten anzugeben, bei welchen interaktiv und echtzeittauglich ohne großen Aufwand aus Bild- und Wärmebildinformationen eine dreidimensionale Objektdarstellung mit Thermalinformationen erstellt wird und eine Vollständigkeit der dreidimensionalen Objektdarstellung laufend kontrolliert werden kann.

Diese Aufgabe wird durch ein Verfahren sowie durch ein System der eingangs genannten Art mit den Merkmalen gemäß den unabhängigen Patentansprüchen gelöst. Vorteilhafte Ausführungsformen der vorliegenden Erfindung sind in den abhängigen Ansprüchen beschrieben.

Erfindungsgemäß erfolgt die Lösung der Aufgabe mit einem Verfahren der eingangs erwähnten Art, bei welchem die jeweiligen Einzelfarbbilder und die jeweiligen zugehörigen Wärmebilder ortssynchron und zeitgleich aufgenommen werden. Dann werden die jeweils mit dem ersten Sensor aufgenommenen Einzelbilder und die entsprechend zugehörigen, mit dem zweiten Sensor aufgenommenen Wärmebilder über eine Datenübertragungseinrichtung von der Aufnahmeeinheit als Bild- und Wärmebilddaten online an eine Servereinheit übertragen, von welcher aus den online empfangenen Bilddaten eine aktuelle, dreidimensionale Objektdarstellung abgeleitet wird. Mit Hilfe der zu den jeweiligen Bilddaten gehörenden, vom zweiten Sensor aufgenommenen Wärmebilddaten wird die Thermalinformation auf die aktuelle, dreidimensionale Objektdarstellung aufgebracht. Dann wird die aktuelle, dreidimensionale Objektdarstellung, welche auf den jeweils aktuell online empfangenen Bild- und Wärmebilddaten basiert, angezeigt und kann auf diese Weise von einer aufnehmenden Person bzw. einem Benutzer interaktiv auf Vollständigkeit, Qualität, etc. überprüft und gegebenenfalls mit weiteren Aufnahmen (Einzelfarbbildern und zugehörigen Wärmebilder) ergänzt werden.

Der Hauptaspekt des erfindungsgemäßen Verfahrens besteht darin, dass auf einfache Weise und ohne großen Aufwand Objekte wie z.B. Infrastrukturelemente, Gebäude, etc. mit Hilfe von Sensoren im dreidimensionalen Raum thermografisch in Echtzeit (d.h., dass eine Aufnahme interaktiv mit entsprechend zuverlässigen Responsezeiten erfolgt, und dass damit eine Bildaufnahmen und eine vorgeschlagene Berechnung durch einen Operator ohne für diesen Vorgang beeinträchtigende Wartezeiten durchgeführt wird) erfasst werden können. Eine Verfahrenskette des erfindungsgemäßen Verfahrens besteht dabei idealer Weise aus zwei Abschnitten. In einem ersten Teil wird eine interaktive Ableitung der aktuellen Szenengeometrie (des dreidimensionalen Raums) bzw. der aktuellen dreidimensionalen Objektdarstellung mit Hilfe von Einzelfarbbildern (z.B. qualitativ hochwertigen Bildaufnahmen), welche einander zumindest leicht überlappen und mit einem optischen Sensor (z.B. Digitalkamera) aufgenommen werden, durchgeführt. Die aufgenommenen Einzelbilder des Objektes werden dabei online bzw. in Echtzeit als Bilddaten an die Servereinheit automatisch weitergeleitet. In einem zweiten Teil des erfindungsgemäßen Verfahrens wird dann synchron die Thermalinformation aus den Wärmebilddaten auf die Szenengeometrie bzw. die aktuelle dreidimensionale Objektdarstellung aufgebracht. Die Thermalinformation wird zusammen mit der 3D-Szeneninformation bzw. als aktuelle, dreidimensionale Objektdarstellung visualisiert und gibt interaktiv während eines Bildaufnahmeprozesses Auskunft bzw. ein Feedback über eine Vollständigkeit und Qualität der aktuell gesammelten bzw. aufgenommenen Bild- und Wärmedaten des zu erfassenden Objektes.

Das erfindungsgemäße Verfahren ermöglicht damit eine schnelle und verlässliche Akquise eines Objektes mit Sensoren in einer 3D-Welt inklusive einer Erfassung der zugehörigen Wärmestrahlung der tatsächlichen geometrischen Oberflächen des zu erfassenden Objektes. Zusätzlich zur Punkttemperatur auf der Oberfläche des Objektes kann beispielsweise auch eine entsprechende Oberflächennormale aus der Geometrie abgeleitet werden, die eine Berechnung der Wärmestrahlung ermöglicht. Weiterhin können beispielsweise Zusatzinformationen wie z.B. individuelle Materialinformationen, etc. interaktiv im 3D-Raum eingehängt bzw. bei der dreidimensionalen Objektdarstellung ergänzt werden, um ein Gesamtbild der physikalischen Wärmecharakteristik zu erhalten. Durch die Berechnung der aktuellen, dreidimensionalen Objektdarstellung bzw. eines Istzustand der dreidimensionalen Objektdarstellung auf Basis der gerade aufgenommenen Bilddaten in Echtzeit können z.B. auch synthetische Daten wie z.B. geplante Vektordaten (z.B. Daten aus einem Computer-Aided-Design-System, einem Geoinformationssystem oder einem Gebäudeinformationssystem, etc.) als Unterstützung für eine gezieltere, weitere Datenaufnahme oder - korrelation eingeblendet werden.

Es ist weiterhin von Vorteil, wenn die aktuelle, dreidimensionale Objektdarstellung mit Thermalinformation und/oder ein Qualitätsstatus der jeweiligen aktuellen, dreidimensionalen Objektdarstellung mit Thermalinformation an die Aufnahmeeinheit online zurückgemeldet bzw. übermittelt wird. Durch die Echtzeiterfassung der Bild- und Wärmebilddaten über die Sensoren und die Online-Weiterleitung an die Servereinheit wird ein rasches Feedback über die aktuell erfasste Szene bzw. über das aktuell erfasste Objekt ermöglicht. Es kann sehr einfach an die Aufnahmeeinheit bzw. an den Benutzer zurückgemeldet werden. Fehlende Bereich in der dreidimensionalen Objektdarstellung oder wenig genau aufgelöste interessante Positionen (z.B. wärmestrahlungsmäßig interessante Punkte, Flächen, etc.) können damit z.B. mittels weiterer Aufnahmen nachgebessert und für eine nachfolgende Offline-Analyse des aufgenommenen Objektes genauer und im Bezug auf Vollständigkeit optimal aufgenommen werden.

Es ist auch günstig, wenn die Thermalinformation als farbcodierte Texturinformation (als so genannte Falschfarbendarstellung) auf die jeweils aktuelle, dreidimensionale Objektdarstellung aufgebracht wird. Bei der Berechnung der Szenengeometrie bzw. der aktuellen, dreidimensionalen Objektdarstellung, bei welcher insbesondere Sensorposition und Blickrichtung berücksichtigt werden, werden beim erfindungsgemäßen Verfahren die synchron mittels des zweiten Sensors (z.B. Wärmebild- oder Thermalkamera) aufgenommene Wärmebilddaten als Farblieferant herangezogen. Die entsprechende Farbcodierung und -skalierung der Thermalinformation kann beispielsweise durch einem vorgegebenen, für den Benutzer oder für die thermografische Analyse interessanten Temperaturbereich vorgegeben werden. Diese Farbcodierung und -skalierung wird z.B. zu Betriebszeiten metrisch normalisiert, sodass für jeden Punkt auf der Oberfläche des zu erfassenden Objektes direkt eine Temperatur abgelesen werden kann. Für eine geometrisch korrekte Einfärbung der 3D-Oberfläche der aktuellen, dreidimensionalen Objektdarstellung kann beispielsweise ein dynamischer Texturatlas für sichtbare Dreiecke der Oberfläche erstellt werden oder es wird z.B. für jeden Eckpunkt die Thermalinformation gesammelt (z.B. gewichtetes Mitteln oder Median-Berechnung). Die Texturierung kann z.B. in gleicher Weise auf für eine RGB-Farbinformation angewendet werden. Dies weist den zusätzlichen Vorteil auf, dass beispielsweise zwischen Realfarben und Thermalinformation in der dreidimensionalen Objektdarstellung interaktiv umgeschaltet werden kann.

Eine bevorzugte Weiterbildung der Erfindung sieht vor, dass für eine Ableitung der jeweils aktuellen, dreidimensionalen Objektdarstellung au den mit dem ersten Sensor aufgenommenen Bilddaten Methoden für einen Echtzeit-3D-Darstellung, insbesondere Online-Structure-From-Motion, verwendet werden. Die Ableitung des 3D-Raumes bzw. der dreidimensionalen Objektdarstellung erfolgt bei diesen Methoden wie z.B. bei dem Online-Structure-From-Motion interaktiv. Wie z.B. in der Schrift "Hoppe et al.; "Online Feedback for Structure-From-Motion Image Aquisition", BVMC, 2012." angeführt, wird dabei jedes Einzelfarbbild inkrementell in ein 3D-Modell über die Bestimmung von 2D-3D-Korrespondenzen und einer optimierten Lösung des sogenannten Absolut-Pose-Problems eingehängt. Für jedes Einzelfarbbild, das für die Ableitung der dreidimensionalen Objektdarstellung herangezogen wird, wird dabei in Echtzeit eine Aufnahmesensorposition und Blickrichtung automatisch ermittelt und zusätzlich die dreidimensionale Objektdarstellung bzw. das kompakte 3D-Modell des Objektes um markante 3D-Punkte erweitert, welche sich aus einer 2D-3D-Korrespondenz ergeben. Eine Grundlage für diese Echtzeitberechnung stellen beispielsweise schnelle Datenstrukturen für Korrespondenzsuchen und Parallelberechnungen z.B. mittels Unterstützung eines Grafikprozessor oder einer Graphics Processing Unit (GPU) dar. Eine Voraussetzung zur Ableitung der dreidimensionalen Objektdarstellung sind insbesondere überlappende Einzelfarbbildaufnahmen. D.h. jedes neue Einzelfarbbild muss einen leichten Überlapp zur aktuell erfassten, dreidimensionalen Objektdarstellung aufweisen. Damit kann, wie z.B. in der Schrift "Hoppe et al.; "Incremental Surface Extraction From Sparse Structure-From-Motion Point Clouds", BMVC, 2013." beschrieben, unter Einbeziehung von Erweiterungen mit markanten Punkten aus der 2D-3D-Korrespondenz (d.h. unter Einbeziehung einer sogenannten sparsen Geometrie) und der Aufnahmesensorposition über eine 3D-Triangulierung, Sichtbarkeitstests und Optimierungsschritte eine reale Oberfläche des zu erfassenden Objektes extrahiert werden. Die resultierende Oberfläche wird dabei z.B. mittels verbundener Dreiecksflächen repräsentiert. Eine derartig abgeleitete dreidimensionale Objektdarstellung kann dann sehr einfach mit einer Thermalinformation als Farblieferant eingefärbt werden.

Vorteilhafter Weise werden für die jeweils aktuelle, dreidimensionale Objektdarstellung in einem Standard 3D-Format, wie z.B. Collada, STL oder PLY, dargestellt wird. Standard 3D-Formate wie z.B. Collada (COLLAborative Design Activity), STL (Surface Tesselation Language) oder PLY (Polygone File Format) stellen Datenformate dar, mit welchen dreidimensionale Objektdarstellungen abgespeichert und/oder z.B. an eine Ausgabeeinheit, eine Speichereinheit, etc. weitergeleitet werden können. Collada ist dabei z.B. ein XML-basiertes offenes Austauschformat für Daten zwischen verschiedenen 3D-Programmen. Dabei können beispielsweise nicht nur Modelle und Texturen, sondern auch Einstellungen und angewandte Veränderungsschritte übermittelt werden. Mit Hilfe des STL-Formats können z.B. Oberflächen von 3d-Objekten mit Hilfe von Dreiecksflächen bzw. -facetten beschrieben werden. Das PLY-Format kann beispielsweise zum Speichern von dreidimensionalen Daten von Objekten oder z.B. 3D-Scanns eingesetzt werden.

Eine zweckmäßige Weiterbildung der Erfindung sieht vor, dass die jeweils aktuellen, dreidimensionalen Objektdarstellungen und/oder von der Servereinheit empfangenen Bild- und Wärmebilddaten und/oder eine Endversion der dreidimensionalen Objektdarstellung in einem Datenmanagementsystem abgespeichert werden. Durch ein Einpflegen und/oder Abspeichern der erfassten Daten - d.h. der aufgenommenen Einzelfarb- und Wärmebilder bzw. der an die Servereinheit übertragenen Bild- und Wärmebilddaten und/oder der dreidimensionalen Objektdarstellungen und/oder der Endversion der Objektdarstellung (3D-Modell des Objektes mit Thermalinformation) stehen auch nachfolgend Daten für Simulationen, Optimierungen und Analysen zur Verfügung. Weiterhin ist es damit auf einfache Weise möglich, eine Beobachtung einer Wärmecharakteristik über die Zeit durchzuführen, da originale Bild- und Wärmebilddaten im örtlichen Bezug zum erfassten Objekt und der 3D-Szene zur Verfügung stehen und gegebenenfalls für nachfolgende bildbasierte Bildlokalisierungen abgerufen werden können.

Weiterhin wird die Aufgabe mit einem System zur Durchführung des erfindungsgemäßen Verfahrens gelöst. Dieses System besteht zumindest aus einer Aufnahmeeinheit mit zwei geometrisch festverbundenen Sensoren, wobei ein erster Sensor Einzelfarbbilder und ein zweiter Sensor Wärmebilder eines dreidimensionalen Objektes zeitgleich aufnehmen. Weiterhin umfasst das System eine Servereinheit zur Online-Ableitung einer aktuellen, dreidimensionalen Objektdarstellung aus den Einzelfarbbildern des ersten Sensors und zum Aufbringen einer Thermalinformation auf die jeweils aktuelle, dreidimensionale Objektdarstellung aus den Wärmebildern des zweiten Sensors. Für eine Übertragung der aufgenommenen Einzelbilder und Wärmebilder als Bild- und Wärmebilddaten zwischen Aufnahmeeinheit und Servereinheit ist eine Datenübertragungseinrichtung vorgesehen.

Die Vorteile des erfindungsgemäßen Systems liegen vor allem darin, dass auf einfache Weise und ohne großen Aufwand eine schnelle und verlässliche Akquise von Objekte wie z.B. Infrastrukturelemente, Gebäude, etc. und/oder Szenen über die Sensoren in einem dreidimensionalen Raum inklusive einer Erfassung der zugehörigen Wärmestrahlung der tatsächlichen geometrischen Oberflächen des aufgenommenen Objektes ermöglicht wird. Mit Hilfe der Servereinheit kann eine jeweils zu den aufgenommenen Bildern und Wärmebildern aktuelle, dreidimensionale Objektdarstellung mit Thermalinformation abgeleitet werden und so einem Benutzer sehr rasch - annähernd in Echtzeit - eine Rückmeldung über Vollständigkeit und Qualität der dreidimensionalen Objektdarstellung zurückgemeldet werden. Damit werden z.B. fehlende Bereiche oder weniger genau aufgelöste, aber für eine Analyse interessante Bereiche in der Objektdarstellung erkennbar. Die Qualität der dreidimensionalen Objektdarstellung mit Thermalinformation kann damit sehr einfach online z.B. durch weitere Bild- und Wärmebildaufnahmen interaktiv verbessert werden.

Für die Aufnahmen - Einzelfarbbilder und Wärmebilder werden idealerweise zwei getrennt nutzbare Sensoren wie eine Digitalkamera als erster Sensor für die Einzelfarbbilder und eine Thermal- oder Wärmebildkamera als zweiter Sensor für die Wärmebilder eingesetzt. Diese Sensoren sind geometrisch fest verbunden - beispielsweise über ein gemeinsame Gehäuse oder eine andere fest geometrische Verbindung (z.B. gemeinsames Stativ, etc.) und können individuell intrinsisch kalibriert werden. Eine intrinsische Sensorkalibrierung erfolgt dabei einmalig für ein eingestelltes Setup, wobei die Sensorparameter wie z.B. fokale Länge, geometrische Auflösung, Linsenverzeichnung und Principal-Point berechnet werden. Durch die geometrisch feste Verbindung der Sensoren bzw. verwendeten Kameras herrscht ein vollständiges, überlappendes Sichtfeld vor. Durch das gemeinsame Sichtfeld ist sehr einfach einen Kalibrierung des Systems möglich. D.h. es können geometrisch eindeutig Relationen zwischen Bildpunkten eines Einzelfarbbildes und Bildpunkten einer Aufnahme mit dem Wärmebild-Sensor bzw. der Thermalkamera hergestellt werden, wobei das Wärmebild beispielsweise im Einzelfarbbild zu sehen ist. Weiterhin sind die Sensoren bzw. die verwendeten Kameras (Digital- und Thermalkamera) bzw. deren Auslöser zeitlich synchronisiert. Damit werden jeweils zeitgleich ein Einzelfarbbild und ein entsprechend zugehöriges Wärmebild aufgenommen und damit von den beiden Sensoren bzw. Kameras sowohl geometrisch/örtlich und zeitlich die gleich Szene festgehalten.

Für die Darstellung der jeweils aktuellen dreidimensionalen Objektdarstellung mit Thermalinformation kann vorteilhafter Weise eine Ausgabeeinheit vorgesehen sein. Mit Hilfe der Ausgabeeinheit kann die jeweils aktuelle, dreidimensionale Objektdarstellung inklusive der zugehörigen Thermalinformation dargestellt und einem Benutzer angezeigt werden, um z.B. die Vollständigkeit und/oder die Qualität zu beurteilen.

Es ist weiterhin günstig, wenn für die Datenübertragungseinrichtung eine Kabelverbindung oder eine Funkverbindung, beispielsweise unter Verwendung einer sogenannten Wireless SD-Karte, eingesetzt wird. Die Datenübertragungseinrichtung des Systems ist vorgesehen, um die von den Sensoren erfassten Daten - Bild- und Wärmebilddaten - auf einfache und schnelle Weise bzw. in Echtzeit an die Servereinheit zu übertragen. Bei einer Kabelverbindung kann beispielsweise sehr einfach eine interaktive Erfassung der Daten in einer sogenannten Client-Server-Infrastruktur ermöglicht werden, wobei z.B. die Aufnahmeeinheit des Systems einen Client und die Servereinheit des Systems einen Server darstellt. Über eine Funkverbindung z.B. mittels einer Wireless SD-Karte kann auf einfache Weise z.B. über ein Funknetz (z.B. Wireless LAN als Funknetzverbindung, Wi-Fi als Funkstandard, etc.) eine Verbindung zur Servereinheit aufgebaut werden, um die Daten zu übertragen. Eine sogenannte Wireless SD-Karte ist ein digitales Speichermedium, welches nach dem Prinzip der Flash-Speicherung arbeitet, und welches eine Integration einer Funkverbindung z.B. Wi-Fi-Standard aufweist. Je nach Karten-Typ werden mittels Funk- bzw. Wi-Fi-Verbindung z.B. eine Synchronisation mit einer Rechnereinheit (z.b. Personal Computer, etc.), ein Laden von Daten über einen sogenannten Hotspot oder Wireless Access Point ins Internet, etc. ermöglicht. Weiterhin können noch geografische Daten eines Aufnahmeortes abgespeichert werden. Durch einen Einsatz einer Funkverbindung z.B. unter Einsatz einer Wireless-SD-Karte können beispielsweise sehr einfach von der Aufnahmeeinheit aufgenommene Daten auf eine z.B. portable Servereinheit zum Ableiten der jeweils aktuellen, dreidimensionalen Objektdarstellung und zum Aufbringen der Thermalinformation übertragen werden. Das erfindungsgemäße System ist z.B. dadurch sehr flexibel und an einem beliebigen Ort einsetzbar. Das erfindungsgemäße System ist idealer Weise sowohl für einen Einsatz in einem Innenraum bzw. für Indoor-Szenarien als auch für Außeneinsätze bzw. für Outdoor-Szenarien geeignet.

### Kurzbeschreibung der Zeichnung

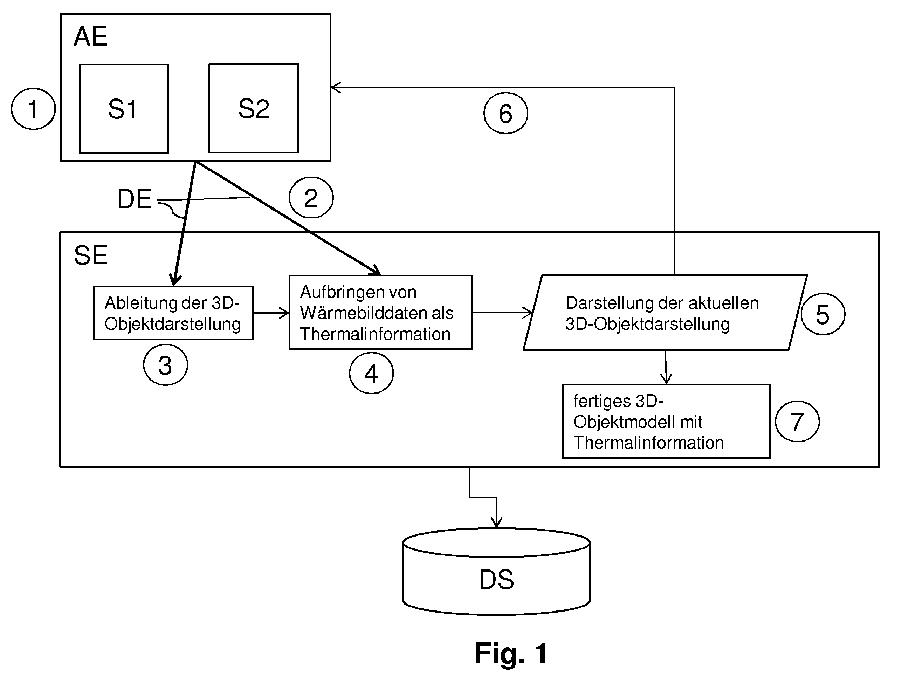

Die Erfindung wird nachfolgend in beispielhafter Weise anhand der beigefügten Figur erläutert. Dabei zeigt Figur 1 in beispielhafter und schematischer Weise das erfindungsgemäße System zur thermografischen 3D-Erfassung von dreidimensionalen Objekten sowie eine beispielhaften Ablauf des erfindungsgemäßen Verfahrens zur thermografischen 3D-Erfassung von dreidimensionalen Objekten mit dem erfindungsgemäßen System.

### Ausführung der Erfindung

Figur 1 zeigt beispielhaft und schematisch das erfindungsgemäße System, welches aus zumindest einer Aufnahmeeinheit AE, einer Datenübertragungseinrichtung DE und einer Servereinheit SE besteht. Die Aufnahmeeinheit AE weist zwei Sensoren S1, S2 auf. Dabei kann ein erster Sensor S1 als Digitalkamera ausgeführt sein. Mit dem ersten Sensor S1 werden Einzelfarbbilder aufgenommen. Als zweiter Sensor S2 kann eine Thermalkamera eingesetzt werden und es werden Wärmebilder mit dem zweiten Sensor S2 aufgenommen. Die beiden Sensoren S1, S2 sind geometrisch fest verbunden - z.B. mittels eines gemeinsamen Gehäuses oder mittels einer Haltevorrichtung (z.B. Stativ, etc.) und individuell intrinsisch kalibriert, sodass ein vollständiges überlappendes Sichtfeld für die Aufnahmen von Einzelfarbbildern und zugehörigen Wärmebildern vorherrscht. Weiterhin sind die beiden Sensoren S1, S2 bzw. ihre Auslöser zeitlich synchronisiert, sodass jeweils zeitgleich ein Einzelfarbbild und ein zugehöriges Thermalbild eines zu erfassenden Objektes aufgenommen werden können.

Weiterhin umfasst das erfindungsgemäße System eine Datenübertragungseinrichtung DE, über welche von der Aufnahmeeinheit AE aufgenommene Daten - d.h. Bild- und Wärmebilddaten von den jeweiligen Einzelfarbbildern und den jeweils zugehörigen Wärmebildern - online an die Servereinheit SE weitergeleitet bzw. übertragen werden können. Die Datenübertragungseinrichtung DE kann beispielsweise als Kabelverbindung ausgeführt sein. Auf diese Weise wird z.B. eine interaktive Erfassung der Daten in einer Client-Server-Infrastruktur ermöglicht, wobei die Aufnahmeeinheit AE einen Client und die Servereinheit SE einen Server darstellen kann. Als Datenübertragungseinrichtung kann z.B. auch eine Funkverbindung zur Servereinheit SE (beispielsweise unter Verwendung einer Wireless-SD-Karte) eingesetzt werden. Bei Einsatz einer Funkverbindung, insbesondere unter Verwendung einer Wireless SD-Karte, können z.B. aufgenommene Einzelfarb- und Wärmebilder lokal in der Aufnahmeeinheit AE gespeichert werden und z.B. dann eine Datensynchronisation bzw. Datenübertragung unter Nutzung des Wi-Fi-Standards zur Servereinheit SE vorgenommen werden.

Die Servereinheit SE des erfindungsgemäßen Systems kann z.B. als zentrale Rechnereinheit ausgeführt sein, durch welche aus den aufgenommenen und übertragenen Bilddaten des zu erfassenden eine jeweils aktuelle, dreidimensionale Objektdarstellung abgeleitet und synchron die jeweils zugehörigen Wärmebilddaten als Thermalinformation auf die jeweils aktuelle, dreidimensionale Objektdarstellung aufgebracht werden. Für eine Darstellung und Anzeige der jeweils aktuellen, dreidimensionalen Objektdarstellung kann das erfindungsgemäße System weiterhin eine Ausgabeeinheit aufweisen, über welche die jeweils aktuelle, dreidimensionale Objektdarstellung auf Vollständigkeit und Qualität - z.B. für ein interaktives Ergänzen und/oder Verbessern - geprüft werden kann. Weiterhin kann an die Servereinheit SE eine Verbindung zu einem Datenmanagementsystem DS aufweisen. Im Datenmanagementsystem DS können beispielsweise die von der Servereinheit SE empfangenen Bilddaten mit den zugehörigen Wärmebilddaten eines zu erfassenden Objektes, Versionen der dreidimensionalen Objektdarstellung, eine Endversion der dreidimensionalen Objektdarstellung eines Objektes, etc. abgespeichert werden. Damit stehen mit dem erfindungsgemäßen System erfasste Daten eines Objekts auch offline z.B. für nachfolgende Simulationen, Optimierungen, Beobachtungen von zeitlichen Veränderungen (z.B. Beobachtungen von Wärmecharakteristiken über die Zeit, etc.), etc. zur Verfügung.

Mit dem in Figur 1 beispielhaft und schematisch dargestellten System kann das erfindungsgemäße Verfahren zur thermografischen 3D-Erfassung von dreidimensionalen Objekten wie z.B. Infrastrukturelementen, Gebäude, Schaltschränke, Leitungen oder Rohren, Solaranlagen, etc. durchgeführt werden. In einem ersten Verfahrensschritt 1 werden von der Aufnahmeeinheit AE Aufnahmen - d.h. Einzelfarbbilder und zugehörige Wärmebilder - des zu erfassenden dreidimensionalen Objektes erstellt. Dabei werden die jeweiligen Einzelfarbbilder vom ersten Sensor S1 mit den entsprechend zugehörigen Wärmebildern, welche vom zweiten Sensor S2 erfasst werden, zeitgleich aufgenommen. Die Einzelfarbbilder werden dabei idealer Weise als qualitativ hochwertig und überlappend vom ersten Sensor S1 aufgenommen. Dann werden in einem zweiten Verfahrensschritt 2 die jeweiligen Einzelfarbbilder mit den jeweils zugehörigen Wärmebildern als Bild- und Wärmebilddaten über die Dateneinrichtung DE von der Aufnahmeeinheit AE online - d.h. automatisch und in Echtzeit - an die Servereinheit SE übertragen.

In einem dritten Verfahrensschritt 3 wird dann von der Servereinheit SE aus den vom ersten Sensor S1 aufgenommenen und online empfangenen Bilddaten eine aktuelle, dreidimensionale Objektdarstellung abgeleitet. Dazu wird beispielsweise eine Methode zur Echtzeit-3D-Darstellung wie z.B. Online-Structure-From-Motion eingesetzt. Dabei wird jedes in der Servereinheit SE verfügbare Einzelfarbbild des zu erfassenden Objektes inkrementell in ein sogenannte kompakte 3D-Modell, welches die jeweils aktuelle Objektdarstellung darstellt, über eine Bestimmung von 2D-3D-Korrespondenzen und einer optimierten Lösung für das sogenannte Absolut-Pose-Problem eingehängt. Es wird für jedes verfügbare Einzelfarbbild automatisch in Echtzeit eine Sensorposition und Blickrichtung bestimmt und zusätzlich das kompakte 3D-Modell durch markante Punkte erweitert, die sich aus den 2D-3D-Korrespondenzen ergeben. Durch überlappende Einzelfarbbilder - d.h. jedes neu aufgenommene Bild muss einen leichten Überlapp zur aktuellen, dreidimensionalen Objektdarstellung aufweisen - können dann unter Einbeziehung der Erweiterungen des kompakten 3D-Modells mit markanten Punkten (sparse Geometrie) und der jeweiligen Sensorposition beispielsweise über 3D-Triangulierung, Sichtbarkeitstests und Optimierungsschritte reale Oberflächen des zu erfassenden Objektes extrahiert werden. Die resultierende, geometrische Oberfläche wird dabei beispielsweise mittels verbundener Dreiecksflächen repräsentiert.

In einem vierten Verfahrensschritt 4 wird dann mit Hilfe der jeweils zugehörigen vom zweiten Sensor S2 aufgenommenen Wärmebilddaten eine Thermalinformation auf die jeweils aktuelle, dreidimensionale Objektdarstellung als farbcodierte Texturinformation aufgebracht. D.h. die synchron vom zweiten Sensor S2 aufgenommene Thermalinformation wird als Farblieferant herangezogen, wobei sich eine entsprechende Farbcodierung und -skalierung der Thermalinformation z.B. aus vorgegebenen interessanten Temperaturbereichen für das jeweils zu erfassende Objekt ergibt. Die Farbcodierung und -skalierung wird dabei beispielsweise metrisch normalisiert, sodass für jeden Punkt auf der Oberfläche eine Temperatur abgelesen werden kann. Für ein geometrisch richtiges Einfärben der 3D-Oberflächen in der dreidimensionalen Objektdarstellung kann beispielsweise ein dynamischer Texturatlas für sichtbare Dreiecke der Oberfläche erstellt werden. Es ist auch möglich, für jeden Eckpunkt in der Objektdarstellung eine Wärmeinformation zu sammeln (z.B. gewichtetes Mitteln oder Median-Berechnung). Die Texturierung kann dann in gleicher Weise z.B. auch für eine RGB-Farbinformation angewendet werden, damit kann zwischen realer Farb- und Thermalinformation in der dreidimensionalen Objektdarstellung interaktiv umgeschaltet werden.

In einem fünften Verfahrensschritt 5 wird dann die Thermalinformation zusammen mit der aktuellen, dreidimensionalen Objektdarstellung - d.h. geometrische Oberflächen inklusive Oberflächennormalen - visualisiert und kann beispielsweise auf der Ausgabeeinheit angezeigt bzw. dargestellt werden. Die aktuelle, dreidimensionale Objektdarstellung, welche auf den jeweils aktuell verfügbaren bzw. aufgenommenen Einzelfarbbildern und Wärmebildern basiert, gibt damit in einem sechsten Verfahrensschritt 6 interaktiv während einer Bilderaufnahme Auskunft über eine Vollständigkeit und Qualität der aktuell gesammelten/aufgenommenen Bilder. Die Darstellung bzw. Datenpräsentation der aktuellen, dreidimensionalen Objektdarstellung kann beispielsweise in Standard 3D-Formaten wie z.B. Collada, STL, PLY, etc. erfolgen. Durch die interaktive Auskunft über Vollständigkeit und Qualität der aktuellen, dreidimensionalen Objektdarstellung im sechsten Verfahrensschritt 6 können sehr einfach z.B. fehlenden Bereiche, wenig genau aufgelöste Bereiche, etc. in der Objektdarstellung durch weitere Bild- und Wärmebildaufnahmen ergänzt und/oder nachgebessert werden.

Ist in einem siebenten Verfahrensschritt 7 eine für eine jeweilige Analyse ausreichende oder gewünschte Vollständigkeit und/oder Qualität der dreidimensionalen Objektdarstellung erreicht, so kann diese beispielsweise als Endversion oder fertiges 3D-Objektmodell mit Thermalinformation in nachfolgenden Auswertungen, Analysen genutzt werden. Das fertige 3D-Objektmodell kann auch von der Servereinheit SE an ein Datenmanagementsystem DS weitergeleitet und dort gespeichert werden. Weiterhin können zur Endversion bzw. zum fertigen 3D-Objektmodell auch die jeweiligen Bild- und Wärmebilddaten, welche für die Erstellung verwendet worden sind, sowie die Zwischenschritte - d.h. die jeweiligen aktuellen, dreidimensionalen Objektdarstellungen - im Datenmanagementsystem DS hinterlegt werden. Damit stehen diese Daten nachfolgend z.B. für Simulationen, Optimierungen, weiterführende Analysen, Beobachtungen von Wärmecharakteristiken über die Zeit, etc. zur Verfügung.

## Patentansprüche

1. Verfahren zur thermografischen 3D-Erfassung von dreidimensionalen Objekten, insbesondere Infrastrukturelementen, wobei für eine Datenerfassung eine Aufnahmeeinheit (AE) mit zwei geometrisch festverbundenen Sensoren (S1, S2) eingesetzt wird, und wobei von einem ersten Sensor (S1) zweidimensionale Einzelfarbbilder und von einem zweiten Sensor (S2) Wärmebilder eines dreidimensionalen Objektes aufgenommen werden, **dadurch gekennzeichnet, das s** die jeweiligen Einzelfarbbilder sowie die jeweils zugehörigen Wärmebilder des dreidimensionalen Objektes von den Sensoren (S1, S2) ortssynchron und zeitgleich aufgenommen werden (1), dass dann die jeweiligen Einzelfarbbilder mit den jeweils zugehörigen Wärmebildern über eine Datenübertragungseinrichtung (DE) von der Aufnahmeeinheit (AE) als Bild- und Wärmebilddaten online an eine Servereinheit (SE) übertragen werden (2), dass von der Servereinheit (SE) aus den mit dem ersten Sensor (S1) aufgenommenen und online empfangenen Bilddaten eine aktuelle, dreidimensionale Objektdarstellung abgeleitet wird (3), dass mit Hilfe der jeweils zugehörigen, vom zweiten Sensor (S2) aufgenommen Wärmebilddaten eine Thermalinformation auf die aktuelle, dreidimensionale Objektdarstellung aufgebracht wird (4), und dass dann die jeweils aktuelle, auf den empfangenen Bild- und Wärmebilddaten basierende, dreidimensionale Objektdarstellung mit Thermalinformation angezeigt wird (5).

2. Verfahren nach Anspruch 1, **dadurch gekennzeichnet, dass** die aktuelle, dreidimensionalen Objektdarstellung mit Thermalinformation und/oder ein Qualitätsstatus der aktuellen, dreidimensionalen Objektdarstellung an die Aufnahmeeinheit (AE) online zurückgemeldet werden (6).

3. Verfahren nach einem Ansprüche 1 bis 2, **dadurch gekennzeichnet, dass** die Thermalinformation als farbcodierte Texturinformation auf die jeweils aktuelle, dreidimensionale Objektdarstellung aufgebracht wird (4).

4. Verfahren nach einem der Ansprüche 1 bis 3, **dadurch gekennzeichnet, dass** für eine Ableitung der jeweils aktuellen, dreidimensionalen Objektdarstellung aus den mit dem ersten Sensor (S1) aufgenommenen Bilddaten Methoden für eine Echtzeit-3D-Darstelllung, insbesondere Online-Structure-From-Motion, verwendet werden (3).

5. Verfahren nach einem der Ansprüche 1 bis 4, **dadurch gekennzeichnet, dass** die jeweils aktuelle, dreidimensionale Objektdarstellung in einem Standard 3D-Format, wie beispielsweise Collada, STL oder PLY, dargestellt wird (5).

6. Verfahren nach einem der Ansprüche 1 bis 5, **dadurch gekennzeichnet, dass** die jeweils aktuellen, dreidimensionalen Objektdarstellungen und/oder von der Servereinheit (SE) empfangenen Bild- und Wärmebilddaten und/oder eine Endversion der dreidimensionalen Objektdarstellung in einem Datenmanagementsystem (DS) abgespeichert werden.

7. Verfahren nach einem der Ansprüche 1 bis 6, **dadurch gekennzeichnet, dass** als erster Sensor (S1) eine Digitalkamera und als zweiter Sensor (S2) eine Thermalkamera in der Aufnahmeeinheit verwendet wird (1).

8. Verfahren nach einem der Ansprüche 1 bis 7, **dadurch gekennzeichnet, dass** als Datenübertragungseinrichtung (DE) zwischen Aufnahmeeinheit (AE) und Servereinheit (SE) eine Kabelverbindung oder eine Funkverbindung, insbesondere unter Verwendung eine sogenannte Wireless SD-Karte, eingesetzt wird (2).

9. System zur Durchführung eines Verfahrens nach einem der vorangegangenen Ansprüche 1 bis 8, zumindest umfassend:
- eine Aufnahmeeinheit (AE) mit zwei geometrisch festverbundenen Sensoren (S1, S2), wobei ein erster Sensor (S1) Einzelfarbbilder und ein zweiter Sensor (S2) Wärmebilder eines dreidimensionalen Objektes zeitgleich aufnehmen,
- einer Servereinheit (SE) zur Online-Ableitung einer aktuellen, dreidimensionalen Objektdarstellung aus den Einzelfarbbildern und zum Aufbringen einer Thermalinformation auf die aktuelle, dreidimensionale Objektdarstellung aus den Wärmebildern,
- und einer Datenübertragungseinrichtung (DE) zur Online-Übertragung der aufgenommenen Einzelfarbbilder und Wärmebilder als Bild- und Wärmebilddaten zwischen der Aufnahmeeinheit (AE) und der Servereinheit (SE).

10. System nach Anspruch 9, **dadurch gekennzeichnet, dass** für eine Darstellung der jeweils aktuellen dreidimensionalen Objektdarstellung mit Thermalinformation eine Ausgabeeinheit vorgesehen ist.

11. System nach einem der Ansprüche 9 bis 10, **dadurch gekennzeichnet, dass** der erste Sensor (S1) als Digitalkamera und der zweiter Sensor (S2) als Thermalkamera ausgeführt ist.

12. System nach einem der Ansprüche 9 bis 11, **dadurch gekennzeichnet, dass** die Datenübertragungseinrichtung (DE) als Kabelverbindung oder als Funkverbindung, insbesondere unter Verwendung einer sogenannten Wireless SD-Karte, ausgeführt ist.
